# DEMANDE DE BREVET EUROPEEN

(11) **EP 4 560 601 A1**
(43) Date de publication de la demande: **28.05.2025**
(21) Numéro de dépôt: 24213408.8
(22) Date de dépôt: 15.11.2024
(51) Int. Cl.: G08G 1/04, G08G 1/0962, G08G 1/0967

(54) **SYSTÈME D ADAPTATION DE L AMBIANCE INTÉRIEURE ET/OU DE LA CONDUITE D'UN VÉHICULE**

(30) Priorité: 21.11.2023 FR 2312828
(71) Demandeur: Renault s.a.s, 92100 Boulogne Billancourt (FR)
(72) Inventeur: DEVAULT, Nicolas, 78084 Guyancourt cedex (FR); HALLOUIN, Thibault, 78084 Guyancourt cedex (FR); SENE, Pape, 78084 Guyancourt cedex (FR)

(57) **Abrégé**

L'invention concerne un système d'adaptation de l'ambiance intérieure d'un véhicule (V) comprenant : un module de détection (1) comprenant un capteur (2) configuré pour capter des signaux représentatifs de l'environnement autour du véhicule (V) sous la forme d'un premier ensemble de données, un module de variation de l'ambiance (3) intérieure sonore et/ou visuelle du véhicule (V), un module de commande (5), le système est caractérisé en ce que :
ledit module de commande (5) est configuré pour, à partir du premier ensemble de données déterminer une probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état, et pour piloter le module de variation de l'ambiance (3) en fonction de ladite probabilité pour commander ou non le passage du module de variation de l'ambiance (3) vers l'état d'émission de prédiction.

## Description

L'invention concerne le domaine des systèmes d'adaptation de l'ambiance intérieure et/ou de la conduite d'un véhicule.

Aujourd'hui, l'un des problèmes principaux des automobilistes est le manque d'attention. Ce manque d'attention peut dans certains cas causer des accidents dramatiques pour les usagers de la route. En particulier, lorsque des variations de vitesse se produisent. Dans ces situations, les véhicules actuels, ne fournissent dans une grande majorité que très peu d'informations au conducteur sur les dangers imminents. Ce qui est d'autant plus paradoxal que les véhicules disposent actuellement de plus en plus de capteurs. Plus particulièrement, la question se pose à l'approche d'une intersection avec un feu de signalisation tricolore et notamment du fait des nouvelles réglementations, un stress additionnel peut s'ajouter à la conduite. En effet, dans certains pays, le code de la route établit une infraction pouvant être sanctionnée d'une amende si le conducteur franchit une intersection alors que le feu de signalisation est au rouge. Or, le conducteur ne sait pas juger par avance la possibilité de s'engager sans risque, notamment lors du passage du feu de signalisation à l'orange puis au rouge en phase d'accélération. La situation de départ au feu de signalisation qui passe du rouge au vert et lors de laquelle le conducteur peut être distrait par l'environnement extérieur à la conduite, par exemple par le paysage, le GPS, le multimédia, constitue également un moment de stress durant la conduite.

Le document US20200080855 traite de la modification du comportement du véhicule en fonction de l'ambiance lumineuse extérieure. Le document US20210316659 traite de l'ambiance lumineuse intérieure du véhicule à partir d'un organe externe, comme une télécommande. Ces documents proposent une adaptation soit de la conduite du véhicule, soit de l'ambiance intérieure du véhicule, mais ne s'intéressent pas à l'adaptation ni de la conduite, ni de l'ambiance intérieure à l'approche d'une intersection avec un feu de signalisation tricolore.

La présente invention a pour but de pallier au moins l'un de ces inconvénients et vise à prévenir et anticiper les situations à risques lorsqu'un véhicule se trouve à proximité d'une intersection comprenant au moins un feu de signalisation.

L'invention concerne un système d'adaptation de l'ambiance intérieure et/ou de la conduite d'un véhicule comprenant au moins :
- un module de détection comprenant au moins un capteur configuré pour capter des signaux représentatifs de l'environnement autour du véhicule sous la forme d'un premier ensemble de données et le cas échéant pour capter des signaux représentatifs de la position et/ou de la vitesse du véhicule sous la forme d'un deuxième ensemble de données,
- un module de variation de l'ambiance intérieure sonore et/ou visuelle du véhicule comprenant au moins un émetteur lumineux et/ou sonore et étant configuré au moins pour émettre un signal d'avertissement lumineux et/ou sonore dans un état d'émission, et/ou
- un module moteur pilotable en couple et/ou un module de freinage pilotable en couple,
- le module de variation de l'ambiance, le module moteur et le module de freinage étant pilotables par un module de commande,
- ledit module de commande étant connecté au moins avec le module de détection et le module de variation de l'ambiance et/ou le module moteur et/ou le module de freinage,
   le système est caractérisé en ce que :
   - ledit module de commande est configuré au moins pour, à partir au moins du premier ensemble de données et le cas échéant du deuxième ensemble de données, déterminer la couleur d'un feu de signalisation et/ou déterminer une probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état,
   - ledit au moins un émetteur est configuré au moins pour émettre le signal d'avertissement correspondant à un état d'émission en approche du feu du module de variation de l'ambiance dépendant de la couleur du feu de signalisation déterminée et/ou à un état d'émission de prédiction du module de variation de l'ambiance dépendant de ladite probabilité,
   - ledit module de commande est configuré pour piloter le module de variation de l'ambiance en fonction de la couleur du feu de signalisation déterminée de sorte à commander ou non le passage du module de variation de l'ambiance vers l'état d'émission en approche du feu et/ou en fonction de ladite probabilité pour commander ou non le passage du module de variation de l'ambiance vers l'état d'émission de prédiction, et/ou pour piloter le module moteur et/ou le module de freinage en fonction de la couleur du feu de signalisation déterminée et/ou de ladite probabilité de sorte à contrôler le véhicule.

L'invention concerne un véhicule caractérisé en qu'il comprend le système selon l'invention.

L'invention concerne un procédé d'adaptation de l'ambiance intérieure et/ou la conduite d'un véhicule caractérisé en ce qu'il est mis en oeuvre par ledit système selon l'invention et en ce qu'il comprend au moins :
- une étape de récupération des données, lors de laquelle les signaux représentatifs de l'environnement autour du véhicule sous la forme du premier ensemble de données et le cas échéant les signaux représentatifs de la position et/ou de la vitesse du véhicule sous la forme du deuxième ensemble de données sont captés par le module de détection, puis
- une étape de détermination, lors de laquelle à partir au moins du premier ensemble de données et le cas échéant du deuxième ensemble de données, ledit module de commande détermine la couleur d'un feu de signalisation et/ou détermine la probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état, puis
- une étape de commande, lors de laquelle ledit module de commande pilote le module de variation de l'ambiance en fonction de la couleur du feu de signalisation déterminée de sorte à commander ou non le passage du module de variation de l'ambiance vers l'état d'émission en approche du feu et/ou en fonction de ladite probabilité pour commander ou non le passage du module de variation de l'ambiance vers l'état d'émission de prédiction, et/ou pilote le module moteur et/ou le module de freinage en fonction de la couleur du feu de signalisation déterminée et/ou de ladite probabilité de sorte à contrôler le véhicule.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente un exemple d'un système d'adaptation de l'ambiance intérieure et/ou de la conduite d'un véhicule selon l'invention, et
[Fig. 2] la figure 2 représente un diagramme de fonctionnement de la modification de l'ambiance lumineuse lors de l'approche d'un feu de signalisation tricolore obtenu avec le système d'adaptation de l'ambiance intérieure et/ou de la conduite d'un véhicule selon une variante possible de l'invention.

Un système d'adaptation de l'ambiance intérieure et/ou de la conduite d'un véhicule V comprend au moins :
- un module de détection 1 comprenant au moins un capteur 2 configuré pour capter des signaux représentatifs de l'environnement autour du véhicule V sous la forme d'un premier ensemble de données et le cas échéant pour capter des signaux représentatifs de la position et/ou de la vitesse du véhicule V sous la forme d'un deuxième ensemble de données,
- un module de variation de l'ambiance 3 intérieure sonore et/ou visuelle du véhicule V comprenant au moins un émetteur 4 lumineux et/ou sonore et étant configuré au moins pour émettre un signal d'avertissement lumineux et/ou sonore dans un état d'émission, et/ou
- un module moteur pilotable en couple et/ou un module de freinage pilotable en couple,
   le module de variation de l'ambiance, le module moteur et le module de freinage étant pilotables par un module de commande 5,

- ledit module de commande 5 étant connecté au moins avec le module de détection 1 et le module de variation de l'ambiance 3 et/ou le module moteur et/ou le module de freinage.

Conformément à l'invention, le système est caractérisé en ce que :
- ledit module de commande 5 est configuré au moins pour, à partir au moins du premier ensemble de données et le cas échéant du deuxième ensemble de données, déterminer la couleur d'un feu de signalisation et/ou déterminer une probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état,
- ledit au moins un émetteur 4 est configuré au moins pour émettre le signal d'avertissement correspondant à un état d'émission en approche du feu du module de variation de l'ambiance 3 dépendant de la couleur du feu de signalisation déterminée et/ou à un état d'émission de prédiction du module de variation de l'ambiance 3 dépendant de ladite probabilité,
- ledit module de commande 5 est configuré pour piloter le module de variation de l'ambiance 3 en fonction de la couleur du feu de signalisation déterminée de sorte à commander ou non le passage du module de variation de l'ambiance 3 vers l'état d'émission en approche du feu et/ou en fonction de ladite probabilité pour commander ou non le passage du module de variation de l'ambiance 3 vers l'état d'émission de prédiction, et/ou pour piloter le module moteur et/ou le module de freinage en fonction de la couleur du feu de signalisation déterminée et/ou de ladite probabilité de sorte à contrôler le véhicule V.

Avantageusement, la présente invention permet de fournir au conducteur au moins une information additionnelle, en exploitant au moins un capteur 2 du véhicule V, qui lui permette d'anticiper l'occurrence des situations à risques lorsqu'un véhicule V se trouve à proximité d'une intersection comprenant au moins un feu de signalisation. Le système selon l'invention permet d'induire une modification du comportement du conducteur en faisant varier l'ambiance lumineuse et/ou sonore à bord du véhicule V et/ou d'agir directement sur le véhicule V en le contrôlant lorsque le véhicule V est à proximité ou au niveau d'une intersection comprenant au moins un feu de signalisation. Ceci est rendu possible par la détection d'informations représentatives de l'environnement à proximité de l'intersection comprenant au moins un feu de signalisation à l'aide du module de détection 1 et par la détermination à partir de ces informations de la couleur d'un feu de signalisation et/ou de la probabilité de changement d'état du feu de signalisation à l'aide du module de commande 5 qui à partir de celle-ci peut piloter le module de variation de l'ambiance 3 et/ou le module moteur et/ou le module de freinage. Il en résulte une meilleure prévention des situations à risques lorsqu'un véhicule V se trouve à proximité d'une intersection avec au moins un feu de signalisation.

Le module de commande 5 est de préférence configuré pour piloter le module de variation de l'ambiance 3 en fonction de la couleur du feu de signalisation déterminée de sorte à commander ou non le passage du module de variation de l'ambiance 3 vers l'état d'émission en approche du feu.

Par conséquent, l'ambiance lumineuse et/ou sonore à l'intérieur du véhicule V peut être modifiée en fonction de la détermination de la couleur effective d'un feu de signalisation, ce qui permet dans ce cas d'avertir le conducteur de la couleur du feu et ainsi à celui-ci d'adapter sa conduite.

Le module de commande 5 est de préférence configuré pour piloter le module de variation de l'ambiance 3 en fonction de ladite probabilité pour commander ou non le passage du module de variation de l'ambiance 3 vers l'état d'émission de prédiction.

Par conséquent, l'ambiance lumineuse et/ou sonore à l'intérieur du véhicule V peut être modifiée en fonction de la détermination de la probabilité de changement d'état du feu de signalisation ce qui permet dans ce cas d'avertir le conducteur de l'imminence ou non du changement d'état du feu de signalisation et ainsi à celui-ci d'adapter sa conduite.

Le module de commande 5 est de préférence configuré pour piloter le module moteur et/ou le module de freinage en fonction de la couleur du feu de signalisation déterminée de sorte à contrôler le véhicule V.

Par conséquent, la trajectoire du véhicule V peut être modifiée de manière autonome en fonction de la détermination de la couleur effective d'un feu de signalisation ce qui permet de contrôler le véhicule V sans l'intervention du conducteur. Cette configuration est une alternative possible ou une option supplémentaire.

Le module de commande 5 est de préférence configuré pour piloter le module moteur et/ou le module de freinage en fonction de ladite probabilité de sorte à contrôler le véhicule V.

Par conséquent, la trajectoire du véhicule V peut être modifiée de manière autonome en fonction de la détermination de la probabilité de changement d'état du feu de signalisation ce qui permet de contrôler le véhicule V sans l'intervention du conducteur. Cette configuration est une alternative possible ou une option supplémentaire.

Ces fonctionnalités du module de commande 5 peuvent être réalisées seules ou en combinaison. En effet, il doit être noté que dans certaines variantes de l'invention, ledit module de commande 5 peut ne pas être configuré pour piloter le module moteur et/ou le module de freinage en fonction de la couleur du feu de signalisation déterminée et/ou de ladite probabilité de sorte à contrôler le véhicule V. Mais alors ledit module de commande 5 est configuré pour piloter le module de variation de l'ambiance 3 en fonction de la couleur du feu de signalisation déterminée de sorte à commander ou non le passage du module de variation de l'ambiance 3 vers l'état d'émission en approche du feu et/ou en fonction de ladite probabilité pour commander ou non le passage du module de variation de l'ambiance 3 vers l'état d'émission de prédiction.

De préférence, le signal d'avertissement est un signal lumineux présentant une longueur d'onde prédéterminée clignotant ou non à une fréquence constante ou variant de manière croissante à l'approche de l'occurrence du changement d'état à une intensité constante ou variable et/ou contenant un message texte.

Avantageusement, le conducteur est averti par un signal d'avertissement lumineux. Par exemple, la fréquence de clignotement du signal lumineux peut être d'autant plus grande que le changement d'état du feu est imminent.

De préférence, le signal d'avertissement est un signal sonore vocal ou un bip sonore.

Avantageusement, le conducteur est averti par un signal d'avertissement sonore.

De préférence, ledit module de commande 5 est configuré pour déterminer la couleur d'un feu de signalisation à partir du premier ensemble de données, ledit au moins un émetteur 4 est configuré pour émettre un premier signal d'avertissement correspondant à un état d'émission nominal et un deuxième signal d'avertissement étant distinct du premier signal et correspondant à un état d'émission en approche du feu du module de variation de l'ambiance 3 dépendant de la couleur du feu de signalisation déterminée, et ledit module de commande 5 est configuré pour piloter le module de variation de l'ambiance 3 en fonction de la couleur du feu de signalisation déterminée et de l'état d'émission du module de variation de l'ambiance 3 pour modifier l'état d'émission du module de variation de l'ambiance 3 de sorte à passer de l'état d'émission nominal à l'état d'émission en approche du feu.

Avantageusement, le module de commande 5 permet de déterminer la couleur d'un feu de signalisation qui peut dans le cas d'un feu de signalisation tricolore émettre un signal lumineux de couleur rouge ou orange ou vert à l'aide dudit au moins un capteur 2 du module de détection 1. En fonction de cette information, le module de commande 5 peut ensuite piloter le module de variation de l'ambiance 3 pour modifier l'état d'émission du module de variation. Par exemple, si le module de commande 5 détermine que la couleur du feu de signalisation est rouge ou orange ou verte, le module de variation de l'ambiance 3 passe de l'état d'émission nominal à l'état d'émission en approche du feu. Le conducteur perçoit ainsi un changement de l'ambiance lumineuse et/ou sonore dans l'habitacle du véhicule V lorsque le véhicule V se trouve au voisinage de l'intersection comportant le feu de signalisation.

De préférence, ledit au moins un émetteur 4 est configuré pour émettre un troisième signal d'avertissement étant identique au premier signal ou distinct du deuxième signal et correspondant audit état d'émission de prédiction du module de variation de l'ambiance, et ledit module de commande 5 est configuré pour piloter le module de variation de l'ambiance 3 en fonction de ladite probabilité et de l'état d'émission du module de variation de l'ambiance 3 pour modifier l'état d'émission du module de variation de l'ambiance 3 de sorte à passer de l'état d'émission en approche du feu à l'état d'émission de prédiction ou pour conserver l'état d'émission du module de variation de l'ambiance 3 dans l'état d'émission en approche du feu.

Avantageusement, le module de commande 5 permet de déterminer la probabilité de changement d'état d'un feu de signalisation, par exemple si le module de commande 5 a déterminé que la couleur du feu de signalisation est rouge ou orange alors le module de commande 5 peut déterminer la probabilité que la couleur du feu de signalisation passe au vert. De manière analogue, par exemple si le module de commande 5 a déterminé que la couleur du feu de signalisation est verte alors le module de commande 5 peut déterminer la probabilité que la couleur du feu de signalisation passe à l'orange ou au rouge. En fonction de cette information, le module de commande 5 peut ensuite piloter le module de variation de l'ambiance 3 pour modifier l'état d'émission du module de variation de l'ambiance 3. Par exemple, si le module de commande 5 prédit que la couleur du feu de signalisation va passer du rouge au vert ou va passer du vert au rouge, le module de variation de l'ambiance 3 passe de l'état d'émission en approche du feu à l'état d'émission de prédiction. Par exemple, si le module de commande 5 prédit que la couleur du feu de signalisation ne va pas passer du rouge au vert ou ne pas va passer du vert au rouge, le module de variation de l'ambiance 3 reste dans l'état d'émission en approche du feu ou passe à l'état d'émission de prédiction. Le conducteur perçoit ainsi un changement ou non de l'ambiance lumineuse et/ou sonore dans l'habitacle du véhicule V lorsque le véhicule V se trouve au voisinage de l'intersection comportant le feu de signalisation qui l'avertit et le conditionne de l'imminence ou non du changement d'état du feu de signalisation. Il en résulte une amélioration de la fluidité du trafic tout en augmentant l'attention du conducteur.

De préférence, ledit au moins un émetteur 4 est configuré pour émettre le deuxième signal étant lumineux et présentant une première longueur d'onde d'émission correspondant de préférence à la couleur verte, et si la couleur du feu de signalisation déterminée par le module de commande 5 est verte et que le module de variation de l'ambiance 3 est dans ledit état d'émission nominal, alors ledit module de commande 5 est configuré pour piloter le module de variation de l'ambiance 3 pour que ledit au moins un émetteur 4 émette le deuxième signal.

Avantageusement, si le module de commande 5 détermine que la couleur du feu de signalisation est verte, le module de variation de l'ambiance 3 passe de l'état d'émission nominal à l'état d'émission en approche du feu dans lequel ledit au moins un émetteur 4 émet le deuxième signal étant lumineux et présentant une première longueur d'onde d'émission correspondant de préférence à la couleur verte. Le conducteur perçoit ainsi un changement de l'ambiance lumineuse dans l'habitacle du véhicule V lorsque le véhicule V se trouve au voisinage de l'intersection comportant le feu de signalisation.

De préférence, ledit au moins un émetteur 4 est configuré pour émettre le troisième signal étant lumineux et présentant une deuxième longueur d'onde d'émission correspondant de préférence à la couleur rouge, et si le changement d'état est prédit par le module de commande 5 et que le module de variation de l'ambiance 3 est dans ledit état d'émission en approche du feu, alors ledit module de commande 5 est configuré pour piloter le module de variation de l'ambiance 3 pour que ledit au moins un émetteur 4 émette le troisième signal.

Avantageusement, si le module de commande 5 prédit que la couleur du feu de signalisation va passer du vert au rouge, le module de variation de l'ambiance 3 passe de l'état d'émission en approche du feu, dans lequel dans lequel ledit au moins un émetteur 4 émet le deuxième signal étant lumineux et présentant une première longueur d'onde d'émission correspondant de préférence à la couleur verte, à l'état d'émission de prédiction, dans lequel ledit au moins un émetteur 4 émet le troisième signal étant lumineux présentant une deuxième longueur d'onde d'émission correspondant de préférence à la couleur rouge. Le conducteur perçoit ainsi un changement de l'ambiance lumineuse dans l'habitacle du véhicule V lorsque le véhicule V se trouve au voisinage de l'intersection comportant le feu de signalisation qui l'avertit et le conditionne de l'imminence du changement d'état du feu de signalisation. Il en résulte une amélioration de la fluidité du trafic tout en augmentant l'attention du conducteur.

De préférence, ledit au moins un émetteur 4 est configuré pour émettre le premier signal étant lumineux et présentant une troisième longueur d'onde d'émission de préférence ne correspondant pas à la couleur rouge ou à la couleur verte, et si l'absence de changement d'état est prédite par le module de commande 5 et que le module de variation de l'ambiance 3 est dans ledit état d'émission en approche du feu, alors ledit module de commande 5 est configuré pour piloter le module de variation de l'ambiance 3 pour que ledit au moins un émetteur 4 émette le premier signal.

Avantageusement, si le module de commande 5 prédit que la couleur du feu de signalisation ne va pas passer du vert au rouge, le module de variation de l'ambiance 3 passe de l'état d'émission en approche du feu, dans lequel ledit au moins un émetteur 4 émet le deuxième signal étant lumineux et présentant une première longueur d'onde d'émission correspondant de préférence à la couleur verte, à l'état d'émission de prédiction, dans lequel ledit au moins un émetteur 4 émet le premier signal étant lumineux et présentant une troisième longueur d'onde d'émission de préférence ne correspondant pas à la couleur rouge ou à la couleur verte. Le conducteur perçoit ainsi un changement de l'ambiance lumineuse dans l'habitacle du véhicule V lorsque le véhicule V se trouve au voisinage de l'intersection comportant le feu de signalisation et s'en éloigne qui l'avertit et le conditionne de l'absence de changement d'état du feu de signalisation. Il en résulte une amélioration de la fluidité du trafic tout en augmentant l'attention du conducteur.

De préférence, ledit au moins un émetteur 4 est configuré pour émettre le deuxième signal étant lumineux et présentant en outre la deuxième longueur d'onde d'émission correspondant de préférence à la couleur rouge, et si la couleur du feu de signalisation déterminée par le module de commande 5 est rouge et que le module de variation de l'ambiance 3 est dans ledit état d'émission nominal, alors ledit module de commande 5 est configuré pour piloter le module de variation de l'ambiance 3 pour que ledit au moins un émetteur 4 émette le deuxième signal.

Avantageusement, si le module de commande 5 détermine que la couleur du feu de signalisation est orange ou rouge, le module de variation de l'ambiance 3 passe de l'état d'émission nominal à l'état d'émission en approche du feu dans lequel ledit au moins un émetteur 4 émet le deuxième signal étant lumineux et présentant la deuxième longueur d'onde d'émission correspondant de préférence à la couleur rouge. Le conducteur perçoit ainsi un changement de l'ambiance lumineuse dans l'habitacle du véhicule V lorsque le véhicule V se trouve au voisinage de l'intersection comportant le feu de signalisation, le véhicule V pouvant être à l'arrêt ou en approche.

De préférence, ledit au moins un émetteur 4 est configuré pour émettre le troisième signal étant lumineux et présentant en outre la première longueur d'onde d'émission correspondant de préférence à la couleur verte, si le changement d'état est prédit par le module de commande 5 et que le module de variation de l'ambiance 3 est dans ledit état d'émission en approche du feu, alors ledit module de commande 5 est configuré pour piloter le module de variation de l'ambiance 3 pour que ledit au moins un émetteur 4 émette le troisième signal.

Avantageusement, si le module de commande 5 prédit que la couleur du feu de signalisation va passer de l'orange ou du rouge au vert, le module de variation de l'ambiance 3 passe de l'état d'émission en approche du feu, dans lequel ledit au moins un émetteur 4 émet le deuxième signal étant lumineux et présentant une deuxième longueur d'onde d'émission correspondant de préférence à la couleur rouge, à l'état d'émission de prédiction, dans lequel ledit au moins un émetteur 4 émet le troisième signal étant lumineux présentant la première longueur d'onde d'émission correspondant de préférence à la couleur verte. Le conducteur perçoit ainsi un changement de l'ambiance lumineuse dans l'habitacle du véhicule V lorsque le véhicule V se trouve au voisinage de l'intersection comportant le feu de signalisation qui l'avertit et le conditionne de l'imminence du changement d'état du feu de signalisation. Il en résulte une amélioration de la fluidité du trafic tout en augmentant l'attention du conducteur.

De préférence, si l'absence de changement d'état est prédite par le module de commande 5 et que le module de variation de l'ambiance 3 est dans ledit état d'émission en approche du feu, alors ledit module de commande 5 est configuré pour piloter le module de variation de l'ambiance 3 pour que ledit au moins un émetteur 4 continue à émettre le deuxième signal.

Avantageusement, si le module de commande 5 prédit que la couleur du feu de signalisation ne va pas passer de l'orange ou rouge au vert, le module de variation de l'ambiance 3 reste dans l'état d'émission en approche du feu, dans lequel ledit au moins un émetteur 4 émet le deuxième signal étant lumineux et présentant la deuxième longueur d'onde d'émission correspondant de préférence à la couleur rouge. Le conducteur ne perçoit ainsi aucun changement de l'ambiance lumineuse dans l'habitacle du véhicule V lorsque le véhicule V se trouve au voisinage de l'intersection comportant le feu de signalisation ce qui l'avertit et le conditionne de l'absence de changement d'état du feu de signalisation. Il en résulte une amélioration de la fluidité du trafic tout en augmentant l'attention du conducteur.

De préférence, le premier ensemble de données comprend seules ou en combinaison : des données représentatives de la couleur du feu de signalisation sur la voie de circulation sur laquelle se trouve le véhicule V, des données représentatives de la couleur de feu de signalisation se trouvant sur les voies de circulation de l'intersection, des données représentatives de la couleur et/ou du minuteur et/ou de la fréquence de clignotement des feux de signalisation de passage piétons sur la voie de circulation sur laquelle se trouve le véhicule V, des données représentatives de la couleur et/ou du minuteur et/ou de la fréquence de clignotement des feux de signalisation de passage piétons se trouvant sur les voies de circulation de l'intersection, des données représentatives de la présence de piétons, des données représentatives de l'état du véhicule V qui précède (à l'arrêt ou en phase de démarrage), la distance du véhicule par rapport au feu de signalisation.

Avantageusement, ce premier ensemble de données permet au module de commande 5 de déterminer l'environnement/la scène autour du véhicule V.

Le système d'adaptation de l'ambiance intérieure d'un véhicule V peut comprendre en outre un module de connectivité configuré pour recueillir des données émanant d'objets de l'infrastructure au voisinage du véhicule V de type V2X et communiquant avec le module de commande 5 et le premier ensemble de données est fusionné avec lesdites données émanant des objets de l'infrastructure au voisinage du véhicule V de type V2X.

Avantageusement, ce premier ensemble de données permet au module de commande 5 de déterminer avec davantage de précision l'environnement/la scène autour du véhicule V. En effet, cette configuration permet une anticipation accrue de la scène ainsi qu'une meilleure fiabilité de l'interprétation de la scène.

De préférence, le module de commande 5 comprend un calculateur programmable configuré pour exécuter un algorithme, comprenant de préférence une intelligence artificielle, pour déterminer la probabilité de changement d'état d'un feu de signalisation dans un délai prédéterminé avant la survenue effective dudit changement d'état à partir du premier ensemble de données et les cas échéant du deuxième ensemble de données.

De préférence, le module de variation de l'ambiance 3 intérieure sonore et/ou visuelle du véhicule V est configuré pour créer une ambiance lumineuse et/ou sonore différenciée entre le passager et le conducteur ou localisée vers la zone d'intérêt.

Avantageusement, cette configuration permet de mieux capter l'attention du conducteur.

Le module de détection 1 comprend un ou plusieurs capteurs 2 tel(s) qu'une ou des caméras. Les caméras permettent de capter les images à l'avant, à l'arrière et sur les côtés du véhicule V. Ce ou ces capteurs 2 peuvent être choisis seuls ou en combinaison parmi une caméra frontale et/ou une caméra AVM (Around View Monitoring). Ledit au moins un capteur 2 peut être à l'intérieur de l'habitacle ou intégré au châssis du véhicule V.

Le module de variation de l'ambiance 3 intérieure sonore et/ou visuelle du véhicule V comprend un ou plusieurs émetteurs 4 lumineux et/ou sonores. Ce module de variation de l'ambiance 3 intérieure sonore et/ou visuelle du véhicule V est de préférence pilotable par le module de commande 5 du véhicule V et par exemple en plus par un assistant personnel virtuel. Ledit au moins un émetteur est à l'intérieur de l'habitacle du véhicule V.

Le ou les émetteurs 4 lumineux et/ou sonores peuvent être choisis seuls ou en combinaison parmi un interface homme machine et/ ou un affichage à tête haute ou tout autre dispositif permettant d'afficher un texte à l'attention du conducteur et/ou une LED et/ou un assistant vocal.

Le module de commande 5 comprend de préférence un calculateur programmable et permettant d'exécuter au moins un algorithme d'analyse de la scène.

De préférence, cet algorithme d'analyse de la scène est à base d'intelligence artificielle et d'un réseau de neurones pour prédire le passage du feu au vert au mieux *X*_{*Sec*-*Before*} secondes avant l'occurrence. Les éléments de la scène prise en compte par le réseau de neurones dans l'analyse sont entre autres l'état du feu tricolore sur notre voie, l'état des feux tricolores des rues de l'intersection et l'état des bonhommes (rouge, vert, clignotant) ainsi que le minuteur si présent pour les piétons qui traversent. On peut également ajouter les piétons, l'état du véhicule V qui précède (à l'arrêt, en phase de démarrage), la distance du véhicule par rapport au feu de signalisation pour rajouter de la richesse à l'algorithme.

L'algorithme peut récupérer en plus les données des objets environnants grâce à un module de connectivité de type V2X. Les feux de signalisation tricolores peuvent transmettre avec précision les informations suivantes : État du feu (vert, rouge, orange), la durée restant dans l'état courant, le futur état du feu (vert, rouge, orange) et ces informations sont récupérées grâce au module de connectivité du véhicule V qui les fusionne avec les données des capteurs 2 du module de détection 1.

Le feu de signalisation est de préférence tricolore ou à trois états et comprend trois émetteurs 4 lumineux à savoir un feu de signalisation rouge, un feu de signalisation orange et un feu de signalisation vert. On comprendra que l'on entend par couleur du feu de signalisation la couleur du signal lumineux émis par celui-ci.

Le module moteur pilotable en couple et/ou un module de freinage pilotable en couple peut être présent ou non dans le système selon l'invention.

L'invention concerne un véhicule V qui comprend le système selon l'invention.

L'invention concerne un procédé d'adaptation de l'ambiance intérieure et/ou la conduite d'un véhicule V caractérisé en ce qu'il est mis en oeuvre par ledit système selon l'invention et en ce qu'il comprend au moins :
- une étape de récupération des données, lors de laquelle les signaux représentatifs de l'environnement autour du véhicule V sous la forme du premier ensemble de données et le cas échéant les signaux représentatifs de la position et/ou de la vitesse du véhicule V sous la forme du deuxième ensemble de données sont captés par le module de détection 1, puis
- une étape de détermination, lors de laquelle à partir au moins du premier ensemble de données et le cas échéant du deuxième ensemble de données, ledit module de commande 5 détermine la couleur d'un feu de signalisation et/ou détermine la probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état, puis
- une étape de commande, lors de laquelle ledit module de commande 5 pilote le module de variation de l'ambiance 3 en fonction de la couleur du feu de signalisation déterminée de sorte à commander ou non le passage du module de variation de l'ambiance 3 vers l'état d'émission en approche du feu et/ou en fonction de ladite probabilité pour commander ou non le passage du module de variation de l'ambiance 3 vers l'état d'émission de prédiction, et/ou pilote le module moteur et/ou le module de freinage en fonction de la couleur du feu de signalisation déterminée et/ou de ladite probabilité de sorte à contrôler le véhicule V.

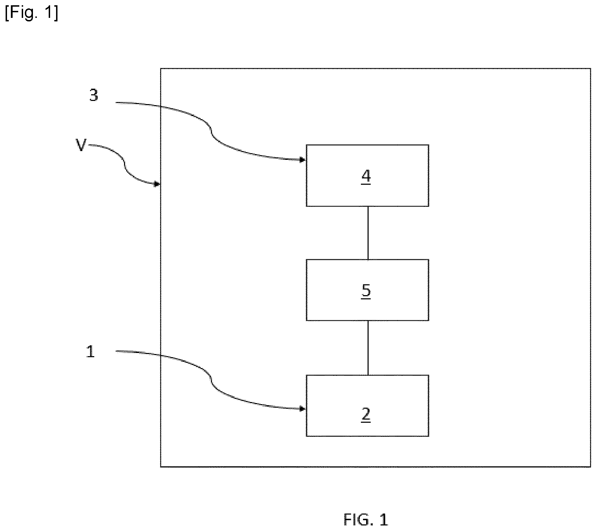

La figure 1 illustre le véhicule V selon l'invention qui comprend le système d'adaptation de l'ambiance intérieure et/ou de la conduite. Dans cet exemple, le système comprend le module de détection 1 comprenant au moins le capteur 2 et le module de variation de l'ambiance 3 intérieure sonore et/ou visuelle du véhicule V comprenant au moins un émetteur 4 lumineux et/ou sonore et un module de commande 5 qui les pilote. Le module de commande 5 est connecté avec le module de détection 1 et le module de variation de l'ambiance 3.

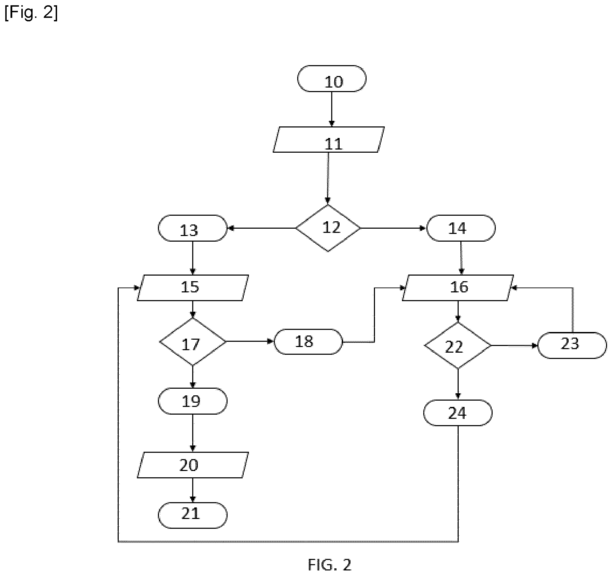

La figure 2 illustre un diagramme de fonctionnement de la modification de l'ambiance lumineuse lors de l'approche d'un feu de signalisation tricolore obtenu avec le système d'adaptation de l'ambiance intérieure et/ou de la conduite d'un véhicule V selon une variante possible de l'invention et qui n'est pas limitative.

La figure 2 montre l'initialisation au bloc 10 et montre au bloc 11 du diagramme que le module de variation de l'ambiance 3 intérieure sonore et/ou visuelle du véhicule V émet un premier signal lumineux dans un état d'émission nominal qui peut avoir été défini par le client par exemple, alors que le véhicule V est en approche du feu de signalisation.

Puis au bloc 12 diagramme, le module de commande 5 détermine la couleur du feu de signalisation, c'est-à-dire détermine si le feu émet un signal lumineux rouge, orange ou vert.

A partir du bloc 12, le diagramme se poursuit soit vers le bloc 13 si le module de commande 5 détermine que la couleur du feu de signalisation est verte, soit vers le bloc 14 si le module de commande 5 détermine que la couleur du feu de signalisation est rouge.

Le bloc 13 se poursuit vers le bloc 15 qui illustre que si le module de commande 5 détermine que la couleur du feu de signalisation est verte, alors le module de variation de l'ambiance 3 intérieure sonore et/ou visuelle du véhicule V émet un signal d'avertissement lumineux dans un état d'émission en approche du feu, dans lequel ledit au moins un émetteur 4 émet le deuxième signal lumineux présentant la première longueur d'onde d'émission correspondant à la couleur verte.

Le bloc 14 se poursuit vers le bloc 16 qui illustre que si le module de commande 5 détermine que la couleur du feu de signalisation est rouge, alors le module de variation de l'ambiance 3 intérieure sonore et/ou visuelle du véhicule V émet un signal d'avertissement lumineux dans un état d'émission en approche du feu, dans lequel ledit au moins un émetteur 4 émet le deuxième signal lumineux présentant la deuxième longueur d'onde d'émission correspondant à la couleur rouge.

Le bloc 15 se poursuit vers le bloc 17 qui illustre que le module de commande 5 détermine la probabilité de changement d'état du feu de signalisation dans un délai prédéterminé avant la survenue effective dudit changement d'état, de sorte à prédire à partir de ladite probabilité soit l'absence dudit changement d'état qui correspond au bloc 19, soit ledit changement d'état qui correspond au bloc 18.

A partir du bloc 19 le diagramme se poursuit vers le bloc 20, si le module de commande 5 a prédit l'absence dudit changement d'état, c'est-à-dire que le feu de signalisation ne va pas passer à l'orange ou au rouge, le module de variation de l'ambiance 3 passe de l'état d'émission en approche du feu à l'état d'émission de prédiction, dans lequel ledit au moins un émetteur 4 émet le premier signal lumineux et présentant la troisième longueur d'onde d'émission ne correspondant pas à la couleur rouge ou à la couleur verte et qui équivaut à l'état d'émission nominal défini par le client par exemple. Le diagramme s'achève ensuite au bloc 21.

A partir du bloc 18 le diagramme se poursuit vers le bloc 16, si le module de commande 5 a prédit la survenue dudit changement d'état, c'est-à-dire que le feu de signalisation va passer à l'orange ou au rouge, alors le module de variation de l'ambiance 3 passe de l'état d'émission en approche du feu à l'état d'émission de prédiction, dans lequel ledit au moins un émetteur 4 émet le troisième signal lumineux présentant la deuxième longueur d'onde d'émission correspondant à la couleur rouge et qui équivaut dans ce cas à l'état d'émission en approche du feu dans lequel ledit au moins un émetteur 4 émet le deuxième signal lumineux présentant la deuxième longueur d'onde d'émission correspondant à la couleur rouge. Le bloc 16 peut alors se poursuivre à nouveau vers le bloc 22.

Le bloc 16 se poursuit vers le bloc 22 qui illustre que le module de commande 5 détermine la probabilité de changement d'état du feu de signalisation dans un délai prédéterminé avant la survenue effective dudit changement d'état, de sorte à prédire à partir de ladite probabilité soit l'absence dudit changement d'état qui correspond au bloc 23, soit ledit changement d'état qui correspond au bloc 24.

A partir du bloc 23, le diagramme se poursuit vers le bloc 16, si le module de commande 5 a prédit l'absence dudit changement d'état, c'est-à-dire que le feu de signalisation ne va pas passer au vert, le module de variation de l'ambiance 3 reste dans l'état d'émission en approche du feu, dans lequel ledit au moins un émetteur 4 émet le deuxième signal étant lumineux présentant la deuxième longueur d'onde d'émission correspondant à la couleur rouge. Le bloc 16 peut alors se poursuivre à nouveau vers le bloc 22.

A partir du bloc 24 le diagramme se poursuit vers le bloc 15, si le module de commande 5 a prédit la survenue dudit changement d'état, c'est-à-dire que le feu de signalisation va passer au vert, alors, le module de variation de l'ambiance 3 passe de l'état d'émission en approche du feu à l'état d'émission de prédiction, dans lequel ledit au moins un émetteur 4 émet le troisième signal étant lumineux présentant la première longueur d'onde d'émission correspondant à la couleur verte et qui équivaut dans ce cas à l'état d'émission en approche du feu dans lequel ledit au moins un émetteur 4 émet le deuxième signal lumineux présentant la première longueur d'onde d'émission correspondant à la couleur verte. Le bloc 15 peut alors se poursuivre à nouveau vers le bloc 17.

La présente invention permet de procurer au conducteur une sérénité à l'approche d'une intersection en garantissant la sécurité pour la traversée aussi bien pour les autres usagers que pour les contrôles routiers. En plus d'aider le conducteur à passer sereinement les feux tricolores, l'invention peut aussi permettre de caractériser le mode de conduite sur ce type de scène puis inciter à une éco-conduite. L'invention peut même faire partie d'un coach pour aider le conducteur à s'améliorer et devenir un argument financier pour les assurances. L'invention a l'avantage de fluidifier le trafic en évitant le phénomène d'accordéon à l'approche d'un feu de signalisation et ainsi augmenter le débit de voitures sur des intersections denses. Elle possède un autre avantage : Le fait de maitriser une situation complexe permet indirectement d'aider les conducteurs à mieux appréhender les intersections possédant des radars de feu de signalisation. L'ambiance lumineuse peut également s'adapter aux personnes le nécessitant, soit par le choix des couleurs, soit par leur contraste ou par leur intensité, comme par exemple les daltoniens. L'invention est une solution à coût faible car elle utilise des capteurs et actionneurs tels que le module de variation de l'ambiance 3, le module moteur pilotable en couple et/ou le module de freinage pilotable en couple, le module de commande 5, déjà présents dans le véhicule V.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Système d'adaptation de l'ambiance intérieure et/ou de la conduite d'un véhicule (V) comprenant au moins :
- un module de détection (1) comprenant au moins un capteur (2) configuré pour capter des signaux représentatifs de l'environnement autour du véhicule (V) sous la forme d'un premier ensemble de données et le cas échéant pour capter des signaux représentatifs de la position et/ou de la vitesse du véhicule (V) sous la forme d'un deuxième ensemble de données,
- un module de variation de l'ambiance (3) intérieure sonore et/ou visuelle du véhicule (V) comprenant au moins un émetteur (4) lumineux et/ou sonore et étant configuré au moins pour émettre un signal d'avertissement lumineux et/ou sonore dans un état d'émission, et/ou
- un module moteur pilotable en couple et/ou un module de freinage pilotable en couple,
le module de variation de l'ambiance (3), le module moteur et le module de freinage étant pilotables par un module de commande (5),
- ledit module de commande (5) étant connecté au moins avec le module de détection (1) et le module de variation de l'ambiance (3) et/ou le module moteur et/ou le module de freinage,
le système est **caractérisé en ce que** :
- ledit module de commande (5) est configuré au moins pour, à partir au moins du premier ensemble de données et le cas échéant du deuxième ensemble de données, déterminer une probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état,
- ledit au moins un émetteur (4) est configuré au moins pour émettre le signal d'avertissement correspondant à un état d'émission de prédiction du module de variation de l'ambiance (3) dépendant de ladite probabilité,
- ledit module de commande (5) est configuré pour piloter le module de variation de l'ambiance (3) en fonction de ladite probabilité pour commander ou non le passage du module de variation de l'ambiance (3) vers l'état d'émission de prédiction, et/ou pour piloter le module moteur et/ou le module de freinage en fonction de ladite probabilité de sorte à contrôler le véhicule (V).

2. Système d'adaptation de l'ambiance intérieure d'un véhicule (V) selon la revendication 1, **caractérisé en ce que** le signal d'avertissement est un signal lumineux présentant une longueur d'onde prédéterminée clignotant ou non à une fréquence constante ou variant de manière croissante à l'approche de l'occurrence du changement d'état à une intensité constante ou variable et/ou contenant un message texte.

3. Système d'adaptation de l'ambiance intérieure d'un véhicule (V) selon l'une quelconque des revendications 1 à 2, **caractérisé en ce que** le signal d'avertissement est un signal sonore vocal ou un bip sonore.

4. Système d'adaptation de l'ambiance intérieure d'un véhicule (V) selon l'une quelconque des revendications 1 à 3, **caractérisé en ce que** :
- ledit module de commande (5) est configuré pour déterminer la couleur d'un feu de signalisation à partir du premier ensemble de données,
- ledit au moins un émetteur (4) est configuré pour émettre un premier signal d'avertissement correspondant à un état d'émission nominal et un deuxième signal d'avertissement distinct du premier signal et correspondant à un état d'émission en approche du feu du module de variation de l'ambiance (3) dépendant de la couleur du feu de signalisation déterminée,
- ledit module de commande (5) est configuré pour piloter le module de variation de l'ambiance (3) en fonction de la couleur du feu de signalisation déterminée et de l'état d'émission du module de variation de l'ambiance (3) pour modifier l'état d'émission du module de variation de l'ambiance (3) de sorte à passer de l'état d'émission nominal à l'état d'émission en approche du feu.

5. Système d'adaptation de l'ambiance intérieure d'un véhicule (V) selon la revendication 4, **caractérisé en ce que** :
- ledit au moins un émetteur (4) est configuré pour émettre un troisième signal d'avertissement identique au premier signal ou distinct du deuxième signal et correspondant audit état d'émission de prédiction du module de variation de l'ambiance,
- ledit module de commande (5) est configuré pour piloter le module de variation de l'ambiance (3) en fonction de ladite probabilité et de l'état d'émission du module de variation de l'ambiance (3) pour modifier l'état d'émission du module de variation de l'ambiance (3) de sorte à passer de l'état d'émission en approche du feu à l'état d'émission de prédiction ou pour conserver l'état d'émission du module de variation de l'ambiance (3) dans l'état d'émission en approche du feu.

6. Système d'adaptation de l'ambiance intérieure d'un véhicule (V) selon l'une quelconque des revendications 5, **caractérisé en ce que** le deuxième signal est lumineux et présente une première longueur d'onde d'émission correspondant de préférence à la couleur verte, et **en ce que** si la couleur du feu de signalisation déterminée par le module de commande (5) est verte et que le module de variation de l'ambiance (3) est dans ledit état d'émission nominal, alors ledit module de commande (5) est configuré pour piloter le module de variation de l'ambiance (3) pour que ledit au moins un émetteur (4) émette le deuxième signal.

7. Système d'adaptation de l'ambiance intérieure d'un véhicule (V) selon les revendications 5 et 6, **caractérisé en ce que** le troisième signal est lumineux et présente une deuxième longueur d'onde d'émission correspondant de préférence à la couleur rouge, et **en ce que** si le changement d'état est prédit par le module de commande (5) et que le module de variation de l'ambiance (3) est dans ledit état d'émission en approche du feu, alors ledit module de commande (5) est configuré pour piloter le module de variation de l'ambiance (3) pour que ledit au moins un émetteur (4) émette le troisième signal.

8. Système d'adaptation de l'ambiance intérieure d'un véhicule (V) selon les revendications 5 et 6, **caractérisé en ce que** le premier signal est lumineux et présente une troisième longueur d'onde d'émission de préférence ne correspondant pas à la couleur rouge ou à la couleur verte, et **en ce que** si l'absence de changement d'état est prédite par le module de commande (5) et que le module de variation de l'ambiance (3) est dans ledit état d'émission en approche du feu, alors ledit module de commande (5) est configuré pour piloter le module de variation de l'ambiance (3) pour que ledit au moins un émetteur (4) émette le premier signal.

9. Système d'adaptation de l'ambiance intérieure d'un véhicule (V) selon l'une quelconque des revendications 5 à 8, **caractérisé en ce que** le deuxième signal est lumineux et présente en outre une deuxième longueur d'onde d'émission correspondant de préférence à la couleur rouge, et **en ce que** si la couleur du feu de signalisation déterminée par le module de commande (5) est rouge et que le module de variation de l'ambiance (3) est dans ledit état d'émission nominal, alors ledit module de commande (5) est configuré pour piloter le module de variation de l'ambiance (3) pour que ledit au moins un émetteur (4) émette le deuxième signal à la deuxième longueur d'onde d'émission.

10. Système d'adaptation de l'ambiance intérieure d'un véhicule (V) selon l'une des revendications 5 et 9, **caractérisé en ce que** le troisième signal est lumineux et présente en outre une première longueur d'onde d'émission correspondant de préférence à la couleur verte, et **en ce que** si le changement d'état est prédit par le module de commande (5) et que le module de variation de l'ambiance (3) est dans ledit état d'émission en approche du feu, alors ledit module de commande (5) est configuré pour piloter le module de variation de l'ambiance (3) pour que ledit au moins un émetteur (4) émette le troisième signal à la première longueur d'onde d'émission.

11. Système d'adaptation de l'ambiance intérieure d'un véhicule (V) selon l'une des revendications 5 et 9, **caractérisé en ce que**, si l'absence de changement d'état est prédite par le module de commande (5) et que le module de variation de l'ambiance (3) est dans ledit état d'émission en approche du feu, alors ledit module de commande (5) est configuré pour piloter le module de variation de l'ambiance (3) pour que ledit au moins un émetteur (4) continue à émettre le deuxième signal.

12. Système d'adaptation de l'ambiance intérieure d'un véhicule (V) selon l'une quelconque des revendications 1 à 11, **caractérisé en ce que** le premier ensemble de données comprend de préférence seules ou en combinaison : des données représentatives de la couleur du feu de signalisation sur la voie de circulation sur laquelle se trouve le véhicule (V), des données représentatives de la couleur de feu de signalisation se trouvant sur les voies de circulation de l'intersection, des données représentatives de la couleur et/ou du minuteur des feux de signalisation de passage piétons sur la voie de circulation sur laquelle se trouve le véhicule (V), des données représentatives de la couleur et/ou du minuteur des feux de signalisation de passage piétons se trouvant sur les voies de circulation de l'intersection, des données représentatives de la présence de piétons, des données représentatives de l'état du véhicule (V) qui précède, la distance du véhicule par rapport au feu de signalisation.

13. Système d'adaptation de l'ambiance intérieure d'un véhicule (V) selon la revendication 12, **caractérisé en ce qu'**il comprend en outre un module de connectivité configuré pour recueillir des données émanant d'objets de l'infrastructure au voisinage du véhicule (V) de type V2X et communiquant avec le module de commande (5) et **en ce que** le premier ensemble de données est fusionné avec lesdites données émanant des objets de l'infrastructure au voisinage du véhicule (V) de type V2X.

14. Système d'adaptation de l'ambiance intérieure d'un véhicule (V) selon l'une quelconque des revendications 1 à 13, **caractérisé en ce que** le module de commande (5) comprend un calculateur programmable configuré pour exécuter un algorithme, comprenant de préférence une intelligence artificielle, pour déterminer la probabilité de changement d'état d'un feu de signalisation dans un délai prédéterminé avant la survenue effective dudit changement d'état à partir du premier ensemble de données et les cas échéant du deuxième ensemble de données.

15. Système d'adaptation de l'ambiance intérieure d'un véhicule (V) selon l'une quelconque des revendications 1 à 14, **caractérisé en ce que** le module de variation de l'ambiance (3) intérieure sonore et/ou visuelle du véhicule (V) est configuré pour créer une ambiance lumineuse et/ou sonore différenciée entre le passager et le conducteur ou localisée vers la zone d'intérêt.

16. Véhicule (V) caractérisé en qu'il comprend le système selon l'une quelconque des revendications 1 à 15.

17. Procédé d'adaptation de l'ambiance intérieure et/ou la conduite d'un véhicule (V) **caractérisé en ce qu'**il est mis en oeuvre par ledit système selon l'une quelconque des revendications 1 à 15 et **en ce qu'**il comprend au moins :
- une étape de récupération des données, lors de laquelle les signaux représentatifs de l'environnement autour du véhicule (V) sous la forme du premier ensemble de données et le cas échéant les signaux représentatifs de la position et/ou de la vitesse du véhicule (V) sous la forme du deuxième ensemble de données sont captés par le module de détection (1), puis
- une étape de détermination, lors de laquelle à partir au moins du premier ensemble de données et le cas échéant du deuxième ensemble de données, ledit module de commande (5) détermine la probabilité de changement d'état d'un feu de signalisation dans un délai prédéterminé avant la survenue effective dudit changement d'état, de sorte à prédire à partir de ladite probabilité soit ledit changement d'état, soit l'absence dudit changement d'état, puis
- une étape de commande, lors de laquelle ledit module de commande (5) pilote le module de variation de l'ambiance (3) en fonction de ladite probabilité pour commander ou non le passage du module de variation de l'ambiance (3) vers l'état d'émission de prédiction, et/ou pilote le module moteur et/ou le module de freinage en fonction de ladite probabilité de sorte à contrôler le véhicule (V).
